Europäisches Patentamt

European Patent Office

Office européen des brevets

(19)

(11) Veröffentlichungsnummer : **0 019 257**
**B1**

(12) **EUROPÄISCHE PATENTSCHRIFT**

(45) Veröffentlichungstag der Patentschrift :
**13.07.83**

(51) Int. Cl.³ : **G 01 N 21/76**

(21) Anmeldenummer : **80102630.3**

(22) Anmeldetag : **12.05.80**

(54) **Reaktionskammer eines Chemilumineszenzanalysators.**

(30) Priorität : **18.05.79 DE 2920215**

(43) Veröffentlichungstag der Anmeldung :
**26.11.80 Patentblatt 80/24**

(45) Bekanntmachung des Hinweises auf die Patenterteilung : **13.07.83 Patentblatt 83/28**

(84) Benannte Vertragsstaaten :
**FR GB NL**

(56) Entgegenhaltungen :
**DE A 2 225 802**
**DE A 2 231 466**
**DE A 2 245 489**
**DE A 2 430 940**
**DE A 2 541 716**

(73) Patentinhaber : **SIEMENS AKTIENGESELLSCHAFT**
**Berlin und München Wittelsbacherplatz 2**
**D-8000 München 2 (DE)**

(72) Erfinder : **Aidam, Eckhard, Ing.-Grad.**
**Ulmenstrasse 7**
**D-6729 Jockgrim (DE)**

EP 0 019 257 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

## Reaktionskammer eines Chemilumineszenzanalysators

Die Erfindung bezieht sich auf die Reaktionskammer eines Chemilumineszenzanalysators mit einem den Reaktionsraum stirnseitig abschließenden Fenster aus strahlendurchlässigem Werkstoff und mit Einleitungen für das stickoxydhaltige Meßgas und das ozonhaltige Reaktionsgas sowie Ableitungen für das Gasgemisch.

Bei vielen Verbrennungsprozessen gelangen gesundheitsschädliche Stickoxyde enthaltende Abgase in die Atmosphäre. Es bedarf deshalb empfindlicher Meßverfahren zur Feststellung der Stickoxydanteile in der Umgebungsluft, wie auch in Industrieabgasen.

Bei einem dieser Verfahren, wie es beispielsweise in der DE-A-22 31 466 beschrieben ist, wird die bei der chemischen Reaktion von Stickoxyd und Ozon auftretende Chemilumineszenz, das ist eine Leuchterscheinung mit konzentrationsabhängiger Lichtstärke, als Meßeffekt genutzt. Zur Durchführung dieses Verfahrens wird ein Chemilumineszenzanalysator verwendet, der eine mit einem strahlungsdurchlässigen Fenster versehene Reaktionskammer enthält, in der das stickoxydhaltige Meßgas und ein ozonhaltiges Reaktionsgas derart zusammengeführt werden, daß die Lumineszenzreaktion in Form einer Punktlichtquelle in unmittelbarer Nähe der Innenfläche des Fensters stattfindet und mit einem vor diesem angeordneten opto-elektronischen Strahlungsempfänger in ein dem NO-Anteil des Meßgases entsprechendes elektrisches Signal umgewandelt wird.

Geräte für die Chemi-Lumineszenzanalyse sind auch in der DE-A 22 25 802 beschrieben.

In einer Reihe von Ausführungsbeispielen werden dort Reaktionskammern gezeigt, bei denen, entsprechend der mit den Ansprüchen gegebenen Lehre, das Meßgas und das Reaktionsgas jeweils an einer einzigen Stelle in die Reaktionskammer eingeführt werden, wobei die Einführungen so ausgebildet sind, daß die Reaktion unmittelbar hinter dem Fenster stattfindet.

Wird das Meßgas aus dem Abgasstrom einer Verbrennung, beispielsweise einer Kesselfeuerung, entnommen, so kann es trotz vorheriger Reinigung Bestandteile enthalten, die mit dem Reaktionsgas in der Reaktionskammer korrosive oder sich an den Wänden und an dem Fenster niederschlagende Reaktionsprodukte bilden.

Dies sei an zwei Beispielen verdeutlicht :

Das Rauchgas öl- und kohlegefeuerter Kessel enthält bis zu 2 000 ppm $SO_2$. Dieses wird von dem Ozon in der Reaktionskammer zu $SO_3$ aufoxydiert, welches sich sofort mit dem noch im Gasgemisch enthaltenen Restwasserdampf zu Schwefelsäure $H_2SO_4$ verbindet. Die Säure wirkt stark korrosiv und beschlägt außerdem das Fenster der Reaktionskammer, da dort der Säuretaupunkt in der Regel unterschritten wird.

Mit dem im Rauchgas enthaltenen CO bildet sich an den Rohrpaketen im Kessel Eisencarbonyl $Fe(CO)_5$, das in Spuren in die Reaktionskammer gelangt. Dort findet eine Reaktion statt, die zur Ablagerung von Eisenhydroxid an den Kammerwandungen und auf dem Fenster führt.

Den durch derartige Niederschläge verursachten Meßwertverfälschungen konnte bisher nur durch häufige und aufwendige Wartung bzw. Austausch der Reaktionskammern begegnet werden.

Es besteht die Aufgabe, eine Reaktionskammer der eingangs genannten Art so auszubilden, daß durch Niederschläge oder korrosive Einflüsse verursachte Änderungen der optischen Eigenschaften der Begrenzungsflächen des Reaktionsraums, insbesondere des Fensters, weitgehend vermieden werden.

Die Lösung der Aufgabe ist im Anspruch 1 gekennzeichnet. Der geringe Reflexionsgrad der Innenwände kann durch « künstliche Alterung » erzielt werden, indem man die Innenflächen des Reaktionsraums der vorzugsweise aus nichtrostendem Stahl hergestellten Reaktionskammer beispielsweise mit Eisencarbonyl und Ozon zur Bildung eines Eisenhydroxidniederschlags behandelt.

Durch die Bespülung der Fensterinnenfläche durch eines der in den Reaktionsraum eingeleiteten Gase wird vor dem Fenster ein « Gasvorhang » gebildet, so daß die bei der Mischung der beiden zugeleiteten Gase entstehenden Reaktionsprodukte nicht zur Fensterfläche gelangen und sich dort niederschlagen können.

Mit der erfindungsgemäßen Ausgestaltung der Reaktionskammer wird auch ein Vorurteil der Fachwelt überwunden, welches besagt, daß die Reaktion unmittelbar hinter dem Abschlußfenster stattfinden sollte, um gute Meßergebnisse zu erzielen, siehe DE-A 22 31 466, Seite 4, mittlerer Abschnitt und Anspruch 5 und DE-A 22 25 802, Seite 10, dritter Abschnitt.

Eine bevorzugte Ausführungsform ist gekennzeichnet durch einen mit einer Zuleitung für das Reaktionsgas versehenen, unter dem Rand des Fensters verlaufenden ersten Ringkanal mit Öffnungen zur radialen und zur Innenfläche des Fensters parallelen Einleitung des Reaktionsgases in den Reaktionsraum sowie durch einen mit einer Zuleitung für das Meßgas versehenen zweiten Ringkanal in der Wand des Reaktionsraums, mit diesem über Öffnungen zur Einleitung des Meßgases verbunden, sowie durch in der dem Fenster gegenüberliegenden Bodenfläche des Reaktionsraums mündende Bohrungen zur Ableitung des Gasgemischs.

Bei dieser Ausbildung des Reaktionsraums und der Gaszu- und -ableitungen ist eine für den Ablauf der Chemilumineszenzreaktion genügende Verweilzeit der Reaktionspartner gesichert.

Besteht das erforderlichenfalls gleichzeitig als Strahlungsfilter dienende Fenster aus ozonempfindlichem Werkstoff, ist es ohne weiteres möglich, die Gasbeschickung der Reaktionskammer umzukehren, d. h. dem ersten Ringkanal, aus dem das Fenster bespült wird, Meßgas und dem zweiten Ringkanal das ozonhaltige Reaktionsgas zuzuführen.

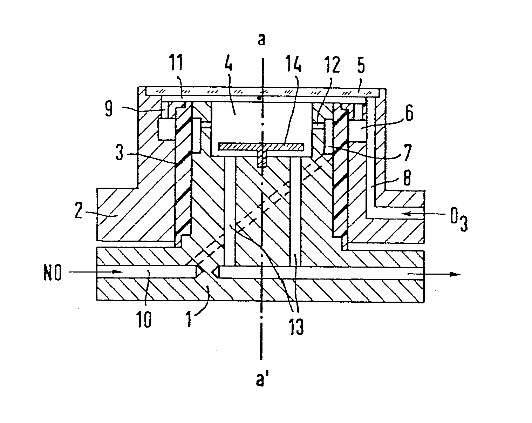

Weitere Vorteile und Einzelheiten der Erfindung sind dem in der Figur dargestellten und nachfolgend beschriebenen Ausführungsbeispiel in Verbindung mit den Unteransprüchen zu entnehmen.

Die im Schnitt dargestellte Reaktionskammer besteht im wesentlichen aus drei Teilen, nämlich einem zylindrischen Kernteil 1, einem diesen umgebenden Mantelteil 2 und einem zwischen diesen beiden Teilen angeordneten Zwischenteil 3, dessen Funktion später erläutert wird.

In seiner oberen Stirnfläche weist der Kernteil 1 eine den Reaktionsraum 4 bildende, nach oben offene Ausnehmung oder Vertiefung auf. Er wird abgeschlossen durch das Fenster 5 in Form einer an ihrem Rand im Mantelteil 2 gefaßten Scheibe aus strahlungsdurchlässigem und ozonbeständigem Werkstoff, erforderlichenfalls mit optischen Filtereigenschaften.

Die Innenwände des in dem aus V4A-Stahl hergestellten Kernteil 1 befindlichen Reaktionsraums 4 sind durch Aufbringen oder Erzeugen einer korrosionsbeständigen, reflexionsarmen Schicht « künstlich gealtert ». Dies kann beispielsweise durch Behandlung mit eisencarbonylhaltigem Gas und Ozon geschehen.

Zur möglichst gleichmäßigen Einleitung des NO-haltigen Meßgases NO und des ozonhaltigen Reaktionsgases $O_3$ in den Reaktionsraum 4 dienen diesen umgebende Ringkanäle, nämlich ein erster Ringkanal 6 im Mantelteil 2 und ein zweiter Ringkanal 7 im Kernteil 1.

Der erste Ringkanal 6 ist in die innere Mantelfläche des Kernteils 1 in der Nähe des das Fenster 5 haltenden Randes eingearbeitet und mit einer Zuleitung 8 für das Reaktionsgas $O_3$ verbunden. Von dem ersten Ringspalt 6 gehen eine Reihe von zur Reaktionskammermittelachse a-a' parallelen, gleichmäßig über den Umfang verteilte Bohrungen 9 aus, die in der Randfläche des Mantelteils 2 unterhalb des Fensters 5 münden.

Anstelle der vom ersten Ringkanal 6 ausgehenden Bohrungen 9 kann auch ein enger Ringspalt treten, der parallel und koaxial zur Achse a-a' verläuft und in der Randfläche des Mantelteils 2 unterhalb des Fensters 5 mündet.

Der zweite Ringkanal 7 ist in der äußeren Mantelfläche des Kernteils 1 eingearbeitet und mit einer Zuleitungsbohrung 10 für das Meßgas NO verbunden.

Zur Abdeckung der Ringkanäle 6 und 7 sowie zur Abdichtung dient das bereits erwähnte Zwischenteil 3, das aus elastischem Werkstoff bestehen kann. Die drei Teile 1, 2 und 3 werden durch hier nicht dargestellte Schraubverbindungen oder dergleichen gegeneinander verspannt.

Die unter dem Fenster 5 liegenden Randflächen des Kernteils 1, des Mantelteils 2 und des Zwischenteils 3 liegen in einer Ebene parallel und mit geringem Abstand zur Fensterinnenfläche, so daß ein Ringspalt 11 gebildet wird, durch welchen das Reaktionsgas aus dem ersten Ringkanal 6 über die Bohrungen 9 in den Reaktionsraum 4 strömt. Dadurch wird vor der Fensterinnenfläche ein Gasvorhang gebildet, der es praktisch ausschließt, daß niederschlagsbildende Reaktionsprodukte, die bei der Chemilumineszenzreaktion entstehen, an das Fenster gelangen. Das an dieser Reaktion beteiligte Meßgas wird aus dem zweiten Ringkanal 7 durch über den Umfang verteilte Bohrungen 12 auf etwa halber Wandhöhe dem Reaktionsraum 4 zugeführt. Zur Ableitung des Gasgemischs dienen Bohrungen 13, die in der dem Fenster 5 gegenüberliegenden Bodenfläche des Reaktionsraums 4 münden.

Zur besseren Durchmischung der Gase und zu einer eventuell nötigen Erhöhung der Verweilzeit kann noch vor den Bohrungen 13 ein Strömungsleitblech 14 angeordnet werden.

Bei einer sonst gleichartigen und daher hier nicht gesondert dargestellten Ausführungsform besteht auch der Zwischenteil 3 wie der Mantelteil 2 aus V4A-Stahl, alle drei Teile sind miteinander verschweißt, so daß die Abdichtung der Ringkanäle gewährleistet ist.

Das Fenster 5 wird in einer eigenen Fassung unter Zwischenlage einer Randdichtung mit dem zur Bildung des Ringspalts 11 nötigen Abstand auf die vereinigten Teile aufgesetzt. Die Ausströmbohrungen 9 sind dabei durch einen ringförmigen Schlitz ersetzt.

## Ansprüche

1. Reaktionskammer eines Chemilumineszenzanalysators mit einem den Reaktionsraum stirnseitig abschließenden Fenster aus für die Lumineszenzstrahlung durchlässigem Werkstoff, mit parallel zur Innenfläche des Fensters in verschiedenen axialen Abständen angeordneten Einleitungen für das NO-haltige Meßgas und das ozonhaltige Reaktionsgas und mit Ableitungen für das Gasgemisch, dadurch gekennzeichnet, daß die Innenwände des Reaktionsraumes (4) einen geringen Reflexionsgrad für die Lumineszenzstrahlung aufweisen, und daß der Reaktionsraum (4) derart ausgebildet ist, daß die Einleitung des Reaktionsgases ($O_3$) oder des Meßgases (NO) gleichmäßig verteilt über den Umfang des dem Fenster (5) benachbarten Kammerrandes erfolgt und die Innenfläche des Fensters (5), einen Gasvorhang bildend, bespült, bevor es mit dem in der Tiefe des Reaktionsraums (4) eingeleiteten Meßgas (NO) oder Reaktionsgas ($O_3$) reagiert.

2. Reaktionskammer nach Anspruch 1, mit in der dem Fenster (5) gegenüberliegenden Bodenfläche des Reaktionsraumes (4) mündenden Bohrungen (13) zur Ableitung des Gasgemisches, gekennzeichnet durch einen mit einer Zuleitung (8) für das Reaktionsgas ($O_3$) versehenen, unter dem Rand des Fensters (5) verlaufenden ersten Ringkanal (6) mit Öffnungen (11) zur radialen und zur Innenfläche des Fensters parallelen Einleitung des Reaktionsgases ($O_3$) in den Reaktionsraum (4), einen mit einer Zuleitung (10) für das Meßgas (NO) versehenen zweiten Ringkanal (7) in der Wand des Reaktionsraums (4), mit diesem über eine Reihe von Öffnungen (12) verbunden.

3. Reaktionskammer nach Anspruch 2, dadurch gekennzeichnet, daß die Reaktionskammer aus drei Teilen aufgebaut ist :

a) ein zylindrischer, den Reaktionsraum (4) in Form einer Ausnehmung enthaltender Kernteil (1), in dessen äußerer Mantelfläche der mit einer Zuleitungsbohrung (10) für das Meßgas (NO) verbundene zweite Ringkanal (7) eingearbeitet ist, von dem aus radial gerichtete, über den Umfang verteilte Bohrungen (12) in etwa halber Wandhöhe in den Reaktionsraum (4) münden ;

b) ein den Kernteil (1) umgebender Mantelteil (2) mit dem Fenster (5) sowie mit dem in seine innere Mantelfläche in der Nähe des das Fenster (5) haltenden Randes eingearbeiteten, mit einer Zuleitung (8) für das Reaktionsgas (O$_3$) verbundenen ersten Ringkanal (6), von dem aus eine Reihe von über den Umfang verteilten Bohrungen (9) achsparallel in der Randfläche münden ;

c) ein als Dichtungsmittel und zur Abdeckung der Ringkanäle (6, 7) zwischen der äußeren Mantelfläche des Kernteils (1) und der inneren Mantelfläche des Mantelteils (2) angeordneter Zwischenteil (3) ;

und daß die unter dem Fenster (5) liegenden Randflächen aller drei Teile (1, 2, 3) in einer Ebene parallel und mit geringem Abstand zur Fensterinnenfläche, einen Ringspalt (11) bildend, angeordnet sind.

4. Reaktionskammer nach Anspruch 3, dadurch gekennzeichnet, daß statt der Reihe von Bohrungen (9) ein achsparalleler enger Ringspalt von dem ersten Ringkanal (6) ausgehend in der Randfläche des Mantelteils (2) mündet.

5. Reaktionskammer nach Anspruch 2 oder 3, dadurch gekennzeichnet, daß dem ersten Ringkanal (6) Meßgas (NO) und dem zweiten Ringkanal (7) Reaktionsgas (O$_3$) zugeführt ist.

**Claims**

1. A reaction chamber of a chemi-luminescence analyser having a window which closes one end of the reaction chamber and is made of a material which is permeable to the luminescence radiation, said analyser having inlets arranged parallel to the inner surface of the window at different axial distances for the measuring gas which contains NO and for the reaction gas which contains ozone, and having outlets for the gas mixture, characterised in that the inner walls of the reaction chamber (4) have a low reflection factor for the luminescence radiation ; and that the reaction chamber (4) is so formed that the introduction of the reaction gas (O$_3$) or the measuring gas (NO) is uniformly distributed around the periphery of that edge of the chamber which is adjacent to the window, and washes against the inner surface of the window (5) so as to form a gas curtain, before it reacts with the measuring gas (NO) or reaction gas (O$_3$) which has been introduced deeper in the reaction chamber (4).

2. A reaction chamber as claimed in Claim 1, comprising bores (13) which open into that end surface of the reaction chamber (4) located opposite to the window (5) and which serve for the discharge of the gas mixture, characterised by a first annular conduit (6) which is provided with an inlet (8) for the reaction gas (O$_3$) and which runs beneath the edge of the window (5), having openings (11) for introducing the reaction gas (O$_3$) into the reaction chamber (4) radially and parallel to the inner surface of the window ; and further characterised by a second annular conduit (7) which is provided with an inlet (10) for the measuring gas (NO) and is arranged in the wall of the reaction chamber (4) to which it is connected via a series of openings (12).

3. A reaction chamber as claimed in Claim 2, characterised in that the reaction chamber consists of three components :

a) a cylindrical core component (1) which contains the reaction chamber (4) in the form of a recess and in whose outer curved surface there is formed the second annular conduit (7) which is connected to a supply bore (10) for the measuring gas (NO) and from which radially directed bores (12) distributed around the periphery open into the reaction chamber (4) at approximately half the wall height ;

b) a casing component (2) which surrounds the core component (1) and which is provided with the window (5) and with the first annular conduit (6) which is formed in the inner curved surface thereof in the vicinity of the edge which supports the window (5), and which is connected to an inlet (8) for the reaction gas (O$_3$) and from which a series of bores (9), distributed around the periphery, parallel to the axis, open into the edge surface ;

c) an intermediate component (3) which is arranged as a sealing means and as a cover for the annular conduits (6, 7), between the outer curved surface of the core component (1) and the inner curved surface of the casing component (2) ;

and that those edge surfaces of all three components (1, 2, 3) which lie beneath the window (5), are arranged in a plane which lies parallel to and at a short distance from the inner face of the window so as to form an annular gap (11).

4. A reaction chamber as claimed in Claim 3, characterised in that, in place of the series of bores (9), a narrow annular gap parallel to the axis, leads from the first annular conduit (6) to the edge surface of the casing component (2).

5. A reaction chamber as claimed in Claim 2 or Claim 3, characterised in that measuring gas (NO) is supplied to the first annular conduit (6) and reaction gas (O$_3$) to the second annular conduit (7).

**Revendications**

1. Chambre de réaction d'un analyseur à chimiluminescence, comprenant une fenêtre qui forme la chambre de réaction du côté frontal et qui est en un matériau transparent au rayonnement luminescent, des conduits d'introduction du gaz à mesurer contenant le NO et du gaz de réaction contenant de l'ozone disposés parallèlement à la surface intérieure de la fenêtre à des distances axiales différentes et des conduits d'évacuation du mélange gazeux, caractérisée en ce que les parois intérieures de la chambre de réaction (4) présentent un facteur de réflexion faible pour le rayonnement luminescent et en ce que la chambre de réaction (4) est agencée de manière à ce que l'introduction du gaz de réaction ($O_3$) ou du gaz à mesurer (NO) s'effectue de façon uniformément répartie sur le pourtour du bord de la chambre voisin de la fenêtre (5) et lave, en formant un rideau de gaz, la surface intérieure de la fenêtre (5), avant que celle-ci ne réagisse sur le gaz à mesurer (NO) ou sur le gaz de réaction ($O_3$) introduit dans le fond de la chambre de réaction.

2. Chambre de réaction suivant la revendication 1, comprenant des perçages (13) pour l'évacuation du mélange gazeux débouchant dans la surface, formant le fond de la chambre de réaction (4), opposée à la fenêtre (5), caractérisée par un premier canal annulaire (6), qui est muni d'un conduit d'amenée (8) du gaz de réaction ($O_3$), qui s'étend sur le bord de la fenêtre (5) et qui a des orifices (11) pour l'introduction radiale et parallèlement à la surface intérieure de la fenêtre du gaz de réaction ($O_3$) dans la chambre de réaction (4), par un second canal annulaire (7), qui est muni d'un conduit d'amenée (10) du gaz à mesurer (NO), qui est ménagé dans la paroi de la chambre de réaction (7) et qui communique avec celle-ci par une série d'orifices (12).

3. Chambre de réaction suivant la revendication 2, caractérisée en ce que la chambre de réaction est formée de trois parties :

a) un noyau (1) cylindrique, contenant la chambre de réaction (4) sous forme d'une cavité et dans la face latérale extérieure duquel est usiné, communiquant avec un perçage d'amenée (10) du gaz à mesurer (NO), le second canal annulaire (7) dont débouchent dans la chambre de réaction (4), environ à mi-hauteur de la paroi, des perçages (12) dirigés radialement et répartis sur le pourtour ;

b) une partie formant surface latérale (2), entourant le noyau (5) et comprenant la fenêtre ainsi que, usiné dans sa surface latérale intérieure au voisinage du bord retenant la fenêtre (5), le premier canal annulaire (6), qui communique avec un conduit d'amenée (8) du gaz de réaction ($O_3$) et dont débouchent dans la surface marginale parallèlement à l'axe des perçages (9) répartis sur le pourtour ;

c) une pièce intermédiaire (3) interposée, comme moyen d'étanchéité et pour recouvrir les canaux annulaires (6, 5), entre la surface latérale extérieure du noyau (1) et la surface latérale intérieure de la partie formant surface latérale (2) ;

et en ce que les surfaces marginales se trouvant en dessous de la fenêtre (5) de toutes les trois parties (1, 2, 3) sont disposées dans un plan, parallèlement à la surface intérieure de la fenêtre et à faible distance de celle-ci, en formant un passage annulaire (11).

4. Chambre de réaction suivant la revendication 3, caractérisée en ce qu'au lieu de la rangée de perçages (9), un passage annulaire étroit, parallèle à l'axe et partant du premier canal annulaire (6) débouche dans la surface marginale de la partie formant surface latérale (2).

5. Chambre de réaction suivant la revendication 2 ou 3, caractérisée en ce que du gaz à mesurer (NO) est envoyé dans le premier canal annulaire (6) et du gaz de réaction ($O_3$) dans le second canal annulaire (7).